# EUROPÄISCHE PATENTSCHRIFT

(11) **EP 3 170 429 B1**
(45) Veröffentlichungstag und Bekanntmachung des Hinweises auf die Patenterteilung: **14.10.2020**
(21) Anmeldenummer: 15195599.4
(22) Anmeldetag: 20.11.2015
(51) Int. Cl.: A47D 5/00

(54) **WICKELMATRATZE, WICKELVORRICHTUNG MIT EINER SOLCHEN UND VERWENDUNG VON DIESEN**
CHANGING MAT, CHANGING DEVICE AND USE THEREOF
MATELAS À LANGER, DISPOSITIF POUR LANGER ET UTILISATION DE CELUI-CI

(43) Veröffentlichungstag der Anmeldung: 24.05.2017
(60) Teilanmeldung: 20188212.3
(73) Patentinhaber: Wiegand, Frank, 61440 Oberursel (DE)
(72) Erfinder: Wiegand, Frank, 61440 Oberursel (DE)
(74) Vertreter: Patentanwälte Olbricht Buchhold Keulertz

(56) Entgegenhaltungen:
- US-A- 3 761 975
- US-A- 4 583 253
- US-A1- 2009 297 743

## Beschreibung

Die Erfindung betrifft eine Wickelmatratze nach Anspruch 1, eine Wickelvorrichtung mit einer solchen nach Anspruch 13 und die Verwendung von diesen gemäß Anspruch 16.

Aus dem Stand der Technik sind verschiedene Wickelunterlagen zum Wickeln von Babys und Kleinkindern bekannt. Tücher, dünne Matten und auch etwas dickere Matratzen werden eingesetzt. Außer Haus kommen jedoch vorwiegend Tücher und Matten zum Einsatz, weil sich diese besser transportieren lassen als Matratzen. Sowohl US2009297743 A1, US4583253 A als auch US3761975 A beschreiben solche Wickelunterlagen.

Problematisch ist bei all diesen Varianten ein Wickeln auf schrägem und unebenem Untergrund, wie er insbesondere auf Fahrzeugsitzen vorliegt. Hier rollt das Kind beim Hantieren oftmals über die Schulter in Richtung der Sitzlehne. Das Hantieren ist entsprechend schwierig, misslingt und führt zu Stress für Eltern und Kind.

Viele Varianten sind schwer zu reinigen und bieten auf kalten Untergründen eine zu geringe thermische Isolation.

Aufgabe der Erfindung ist es daher eine Vorrichtung und deren Verwendung bereitzustellen, mit der ein Kind in möglichst vielen Alltagssituationen komfortabel und einfach gewickelt werden kann. Die Vorrichtung sollte zusätzlich einfach transportabel, kompakt mitführbar, einfach in der Handhabung, thermisch Isolierend und gut zu reinigen sein.

Hauptmerkmale der Erfindung sind im kennzeichnenden Teil von Anspruch 1 sowie den Ansprüchen 13 und 16 angegeben. Ausgestaltungen sind Gegenstand der Ansprüche 2 bis 12, 14, 15 und 17.

Die Erfindung betrifft eine Wickelmatratze mit einer Oberseite, einer Unterseite, einer ersten Seitenbegrenzung und einer zweiten Seitenbegrenzung, die sich gegenüberliegen, sowie mit einem vorderen Ende und einem hinteren Ende, die quer zu der ersten und zweiten Seitenbegrenzung ausgerichtet sind, wobei das vordere Ende im Verhältnis zum hinteren Ende eine Verjüngung aufweist; und wobei in dieser wenigstens eine erste Luftkammer angeordnet ist, wobei die Wickelmatratze bei einer Befüllung der ersten Luftkammer mit Luft versteift ist.

Der Vorteil der erfindungsgemäßen Verjüngung liegt darin, dass die Wickelmatratze gut auf einen Fahrzeugsitz legbar ist, ohne dass die Liegefläche zu stark verringert ist. In der Verjüngung kann beispielsweise eine Seitenwange einer Sitzlehne liegen. Die um die Verjüngung verkürzte erste Seitenbegrenzung kann dann an der Rückenlehne des Fahrzeugsitzes liegen, das heißt hier ist kein Ritz, in den das Baby hineinrollen könnte. In einer anderen Anwendung, insbesondere wenn die wickelnde Person nicht frontal seitlich zum Fahrzeugsitz Zugang hat, ist es auch möglich, die Rücklehne in der Verjüngung zu positionieren und die Wickelmatratze diagonal auf dem Fahrzeugsitz auszurichten. Trotz Verjüngung verbleibt auch hierbei eine große Auflagefläche zwischen der Unterseite und dem Fahrzeugsitz, sodass die Wickelmatratze nicht vom Sitz zu kippen droht. Die Wickelmatratze kann natürlich auch an anderen Einsatzorten als auf Fahrzeugsitzen benutzt werden. Bevorzugt bildet die Oberseite eine ebene Liegefläche aus. Eine Liegemulde entsteht bei weicher Ausführung alleine durch das Auflegen des Babys. Optional kann jedoch auch eine Liegemulde in der unbelasteten Wickelmatratze ausgebildet sein. Hierdurch wird einem Rollen des Kindes stärker entgegengewirkt. Die Unterseite sollte eine ebene Auflagefläche ausbilden. Hierdurch lässt sich die Wickelmatratze im Alltag problemlos auf allen ebenen Flächen ausbreiten und nutzen. Die erste und zweite Seitenbegrenzung sowie das vordere und hintere Ende rahmen die Oberseite und Unterseite ein bzw. begrenzen deren Erstreckung.

Eine optionale Ausgestaltung sieht vor, dass die erste Seitenbegrenzung und die zweite Seitenbegrenzung zumindest im Wesentlichen parallel zueinander ausgerichtet sind. Hierdurch ergibt sich ein Abschnitt mit gleichbleibender Breite der Liegefläche.

Bei einer besonderen Ausführungsform der Wickelmatratze ist die Verjüngung zumindest teilweise durch eine erste stumpfe Ecke zwischen dem vorderen Ende und der ersten Seitenbegrenzung ausgebildet. Damit kann eine große Liegefläche bereitgestellt werden, die erst im Bereich der ersten stumpfen Ecke schmäler wird.

Für einen möglichst große Flexibilität hinsichtlich des Einsatzortes, insbesondere auch auf Fahrzeugsitzen bzw. Sitzen von Personenkraftwagen, bietet sich eine Ausgestaltung an, bei der sich die erste stumpfe Ecke auf der Seite des vorderen Endes über 10 % bis 50 %, vorzugsweise über 20 % bis 45 %, weiter bevorzugt über 25 % bis 42 %, und besonders bevorzugt über 30 % bis 40 % des Abstands zwischen der ersten und zweiten Seitenbegrenzung erstreckt.

Hierzu trägt auch eine Ausführungsform bei, nach der sich die erste stumpfe Ecke auf der Seite der ersten Seitenbegrenzung über 15 % bis 40 %, vorzugsweise über 17 % bis 38 %, weiter bevorzugt über 20 % bis 35 %, und besonders bevorzugt über 25 % bis 30 % des Abstands zwischen dem vorderen Ende und dem hinteren Ende erstreckt.

Grundsätzlich könnte die erste stumpfe Ecke eine konkave oder konvexe Krümmung aufweisen. Bei einem speziellen Design der Wickelmatratze ist die erste stumpfe Ecke allerdings von einer schrägen ersten Eckkante der Wickelmatratze ausgebildet. Eine solche insbesondere gerade Eckkante bildet eine stabile Anlagefläche, ohne dass eine Mulde zum anliegenden Teil wie einer Sitzlehne entsteht. Außerdem ist die verbleibende Liegefläche groß. Besonders bevorzugt ist die erste Eckkante in einem Winkel zwischen 35 Grad und 55 Grad, bevorzugt zwischen 40 Grad und 50 Grad und besonders bevorzugt von 45 Grad zur ersten Seitenbegrenzung und zum vorderen Ende bzw. einer Vorderkante ausgerichtet. Der Innenwinkel sollte also zwischen 145 Grad und 125 Grad liegen.

Eine noch höhere Flexibilität hinsichtlich des Einsatzortes wird mit einer optionalen Ausführung der Wickelmatratze erreicht, bei der die Verjüngung zumindest teilweise, insbesondere zusätzlich zur ersten stumpfen Ecke, durch eine zweite stumpfe Ecke zwischen dem vorderen Ende und der zweiten Seitenbegrenzung ausgebildet ist. Damit kann die Wickelmatratze ohne Einschränkung auf beiden Seiten eines Fahrzeugs benutzt werden. Die Oberseite und die Unterseite können hierbei aus unterschiedlichen Materialien bestehen. Die Unterseite kann beispielsweise eine höhere Rutschhemmung und/oder höherer Robustheit als die Oberseite aufweisen. Die Oberseite kann insbesondere eine bessere Reinigbarkeit und/oder Haptik als die Unterseite aufweisen.

Weil Fahrzeugsitze meist im Wesentlichen symmetrisch im Fahrzeug aufgebaut sind, bietet sich ein Design an, bei dem die zweite stumpfe Ecke der ersten stumpfen Ecke ähnelt. Insbesondere sollte sich die zweite stumpfe Ecke auf der Seite des vorderen Endes über 10 % bis 50 %, vorzugsweise über 20 % bis 45 %, weiter bevorzugt über 25 % bis 42 %, und besonders bevorzugt über 30 % und 40 % des Abstands zwischen den Seitenbegrenzungen bzw. Seitenkanten erstrecken. Des Weiteren sollte sich die zweite stumpfe Ecke auf der Seite der ersten Seitenbegrenzung über 15 % bis 40 %, vorzugsweise über 17 % bis 38 %, weiter bevorzugt über 20 % bis 35 %, und besonders bevorzugt über 25 % bis 30 % des Abstands zwischen dem vorderen Ende und dem hinteren Ende erstrecken. Optional kann die zweite stumpfe Ecke von einer schrägen zweiten Eckkante der Wickelmatratze ausgebildet sein. Besonders bevorzugt ist die zweite stumpfe Ecke zumindest im Wesentlichen spiegelverkehrt zur ersten stumpfen Ecke ausgebildet.

In einer speziellen Variante weist die Wickelmatratze einen flachen Kragen auf, der die Oberseite und die Unterseite einrahmt. Ein solcher Rahmen bildet einen Schutz für eine etwaige dünne empfindliche Haut der ersten Luftkammer. Dabei können die Oberseite und die Unterseite im Kragen miteinander verbunden sein, zum Beispiel durch Kleben oder Schweißen. Der Kragen sollte eine Breite von maximal 5,0 cm, vorzugsweise von maximal 4,0 cm aufweisen.

Ferner besteht die Option, dass Aufhängelöcher in der Wickelmatratze ausgebildet sind. Mit diesen lässt sich die Wickelmatratze zur Nutzung oder Aufbewahrung hängend befestigen. Als Anbringungsort besonders geeignet ist der optionale Kragen. Das heißt, dass die Aufhängelöcher im Kragen der Wickelmatratze ausgebildet sind.

In der Praxis bewährt sich insbesondere eine Ausführung, gemäß der die Wickelmatratze flach ausgebildet ist, vorzugsweise beträgt der Abstand zwischen der ersten und zweiten Seitenbegrenzung bzw. einer Seitenkante wenigstens dem 5-fache, bevorzugt wenigstens dem 7-fachen und besonders bevorzugt wenigstens dem 10-fachen, des Abstandes zwischen der Oberseite und der Unterseite.

Bezüglich der Anwendung mit einem Baby oder einem Kleinkind und auf einem Autositz erweisen sich spezielle absolute Abmessungen der Wickelmatratze als besonders vorteilhaft. Insbesondere sollte der Abstand zwischen dem vorderen Ende und dem hinteren Ende zwischen 40 cm und 90 cm, vorzugsweise zwischen 50 cm und 85 cm, weiter bevorzugt zwischen 55 cm und 80 cm, und besonders bevorzugt zwischen 60 cm und 75 cm betragen. Weiterhin bietet sich eine Dimensionierung an, bei welcher der Abstand zwischen der ersten und der zweiten Seitenbegrenzung bzw. Seitenkante zwischen 35 cm und 70 cm, vorzugsweise zwischen 40 cm und 65 cm, weiter bevorzugt zwischen 45 cm und 62 cm, und besonders bevorzugt zwischen 50 cm und 60 cm beträgt.

Außerdem sind absolute Dimensionen vorteilhaft, bei denen der Abstand zwischen Oberseite und Unterseite zwischen 3,0 cm und 9,0 cm, vorzugsweise zwischen 3,5 cm und 7 cm sowie besonders bevorzugt zwischen 4 cm und 6 cm beträgt. Hierdurch kann eine hinreichende Steifigkeit bei geringem Pack- bzw. Luftvolumen erzielt werden.

Erfindungsgemäss ist in der Wickelmatratze wenigstens eine erste Luftkammer angeordnet, wobei die Wickelmatratze bei einer Befüllung der ersten Luftkammer mit Luft versteift ist. Im umgekehrten Fall ist die Wickelmatratze weniger steif. Insbesondere ist die Wickelmatratze bei Entlüftung der ersten Luftkammer schlaff. Die Wickelmatratze sollte dann keine Eigensteifigkeit aufweisen und ist vorzugsweise zusammenlegbar. Damit lässt sich die Wickelmatratze komfortabel mitführen, denn sie ist entlüftet und kompakt. Zur Belüftung und Entlüftung sollte die Wickelmatratze ein erstes Luftventil aufweisen. Dieses erste Luftventil kann in die erste Luftkammer münden. Bevorzugt ist das erste Luftventil am Umfang der Wickelmatratze angeordnet, insbesondere zwischen der Oberseite und der Unterseite. Hier stört es weder das aufliegende Baby noch bildet es eine Unebenheit auf der Unterseite aus. Außerdem kann das Ventil hier am einfachsten mit dem Mund belüftet werden. Zum Ausgleich von schrägem Untergrund kann etwas unter die steife Wickelmatratze gelegt werden, um das Gefälle auszugleichen. Eine vollflächige Unterfütterung ist aufgrund der Steifigkeit der Wickelmatratze nicht notwendig. Ein weiterer Vorteil der ersten Luftkammer ist die gute thermische Isolation des Kindes vom Untergrund. Infekte durch Auskühlung werden vermieden.

Die erste Luftkammer kann ein reiner Hohlraum sein, der mit Luft befüllbar ist. Das heißt es sind keine Entfaltungsmittel vorhanden. Dies ist besonders preiswert. In einer Variante der Wickelmatratze weist diese jedoch elastische Entfaltungsmittel auf, welche eine Entfaltungskraft auf die Luftkammer ausüben. Damit wird die Anstrengung beim Aufblasen zumindest teilweise verringert, denn die Belüftung erfolgt zumindest teilweise ohne ein Zutun. Die Wickelmatratze sollte gewissermaßen eine selbstaufblasbare Luftmatratze sein. Besonders bevorzugt ist in der Luftkammer ein elastischer Schaumstoff angeordnet. Durch optionale Längskanäle und/oder Querkanäle und/oder vertikale Hohlräume kann das Volumen des Schaumstoffs gering gehalten werden. Die Wickelmatratze 10 ist hierdurch leicht entlüftbar und zusammenlegbar. Außerdem hat die Wickelmatratze ein geringes Transportgewicht.

Die Erfindung betrifft außerdem eine Wickelvorrichtung mit einer Wickelmatratze, die eine Oberseite, eine Unterseite, eine erste Seitenbegrenzung und eine zweite Seitenbegrenzung, die sich gegenüberliegen, sowie ein vorderes Ende und ein hinteres Ende aufweist, die quer zu der ersten und zweiten Seitenbegrenzung ausgerichtet sind, und mit einer Begradigungsvorrichtung, mit der die Wickelmatratze über einem geodätisch schrägen Untergrund geodätisch gerade ausrichtbar ist. Damit wird erreicht, dass die Wickelmatratze eine ebene Auflage für das Baby ausbildet, welches beim Hantieren folglich nicht rollt. Grundsätzlich kann die Wickelmatratze beispielsweise ein Flachkörper in der Form eines Rechtecks mit oder ohne abgerundeten Ecken, eines Eis, eines Ovals oder einer Kombination eines Rechtecks und Halbkreises sein.

Insbesondere betrifft die Erfindung eine Wickelvorrichtung mit einer Wickelmatratze mit Verjüngung am vorderen Ende wie sie vor- und nachstehend beschrieben ist und einer Begradigungsvorrichtung, mit der die Wickelmatratze über einem geodätisch schrägen Untergrund geodätisch gerade ausrichtbar ist.

Damit wird ebenfalls erreicht, dass die Wickelmatratze eine ebene Auflage für das Baby ausbildet, welches beim Hantieren folglich nicht rollt. Außerdem ist die Wickelmatratze aufgrund der Verjüngung besonders flexibel und gut auf Autositzen einsetzbar.

In einer Ausführungsvariante der Wickelvorrichtung weist die Begradigungsvorrichtung ein Luftkissen auf, das auf oder unterhalb der Unterseite der Wickelmatratze angeordnet ist. Ein Luftkissen hat den Vorteil, dass es sich durch Belüften oder Entlüften einfach in der Dicke an den Untergrund anpassen lässt. Außerdem gleicht es Unebenheiten im Untergrund durch Luftumverteilung aus. Hierfür sollte das Luftkissen eine zweite Luftkammer aufweisen. Optional ist die Dicke des Luftkissens perpendikular zur Unterseite der Wickelmatratze durch variable Befüllung der zweiten Luftkammer mit Luft einstellbar. In der Praxis bewährt sich insbesondere eine Ausgestaltung, nach der die maximale Dicke des Luftkissens zwischen 4 cm und 20 cm, vorzugsweise zwischen 8 cm und 18 cm, weiter bevorzugt zwischen 11 cm und 17 cm und besonders bevorzugt zwischen 12 cm und 16 cm beträgt. Mit einer solchen Dimensionierung wird eine Kompatibilität mit den meisten Fahrzeugsitzen erreicht. Für das Belüften und Entlüften sollte das Luftkissen ein zweites Luftventil aufweisen. Dieses zweite Luftventil kann in die zweite Luftkammer münden. Bevorzugt mündet das zweite Luftventil am Umfang um die Länge und Breite in die zweite Luftkammer, insbesondere zwischen einer Kissenoberseite und einer Kissenunterseite. Hier bildet das zweite Luftventil keine Unebenheit auf der Kissenoberseite und der Kissenunterseite aus. Außerdem kann das zweite Luftventil zum Aufblasen einfach mit dem Mund erreicht werden. Optional ist am Umfang des Luftkissens zwischen der Kissenoberseite und der Kissenunterseite ein Kissenkragen ausgebildet ist, der die Kissenoberseite und die Kissenunterseite einrahmt. Die Kissenoberseite und die Kissenunterseite können im Kissenkragen miteinander verbunden sein. Darüber hinaus ist die Wickelvorrichtung besonders flexibel einsetzbar, wenn das Luftkissen nicht an der Wickelmatratze befestigt ist. Vielmehr sollte es lose untergelegt sein.

Für eine stabile Unterstützung der Wickelmatratze ist eine Dimensionierung optimal, bei der die maximale Dicke des Luftkissens, insbesondere zwischen der Kissenoberseite und einer Kissenunterseite, kleiner ist als die Länge des Luftkissens. Hierzu trägt auch die optionale Dimensionierung bei, nach der die maximale Dicke des Luftkissens kleiner ist als die Breite des Luftkissens. Variabel auf einen unebenen Untergrund wie einem Fahrzeugsitz lässt sich ein Luftkissen anordnen, bei dem die Breite des Luftkissens kleiner ist als die Länge des Luftkissens. In der Praxis bewährt sich eine absolute Größe des Luftkissens, bei dem die maximale Länge des Luftkissens zwischen 20 cm und 55 cm, vorzugsweise zwischen 25 cm und 50 cm, weiter bevorzugt zwischen 30 cm und 46 cm und besonders bevorzugt zwischen 35 cm und 43 cm beträgt. Außerdem bewährt sich eine Auslegung, gemäß der die maximale Breite des Luftkissens zwischen 8 cm und 25 cm, vorzugsweise zwischen 10 cm und 24 cm, weiter bevorzugt zwischen 12 cm und 23 cm und besonders bevorzugt zwischen 13 cm und 22 cm beträgt.

Auch im Verhältnis zur Größe der Wickelmatratze stellen sich Dimensionierungen als vorteilhaft dar. So sollte die maximale Dicke des Luftkissens größer sein als der Abstand zwischen der Oberseite und der Unterseite der Wickelmatratze. Die Wickelmatratze bleibt also kompakt und mit dem Luftkissen können verhältnismäßig große Unebenheiten bzw. Gefälle im Untergrund ausgeglichen werden. Außerdem sollten die Länge und die Breite des Luftkissens geringer sein als der Abstand zwischen der ersten und der zweiten Seitenbegrenzung der Wickelmatratze. Dies erlaubt insbesondere ein gutes Einlegen des Luftkissens in einen Fahrzeugsitz, der Seitenwangen an der Sitzfläche und/oder an der Rücklehne aufweist.

Die optionale Anordnung des Luftkissens unterhalb der Unterseite der Wickelmatratze kann unterschiedlich erfolgen. In einer Variante liegt das Luftkissen lose, das heißt ohne Koppelmittel an der Wickelmatratze an. Hierdurch ist das Luftkissen frei zur Wickelmatratze positionierbar. In einer zweiten Variante sind die Wickelmatratze und das Luftkissen über lösbare Koppelmittel verbunden. Es eignen sich beispielsweise Knöpfe, Klettverschlüsse oder Reißverschlüsse. Ein Verrutschen des Luftkissens unterhalb der Wickelmatratze wird so vermieden. In einer dritten Variante ist das Luftkissen fest mit der Wickelmatratze verbunden. Optional sind das Luftkissen und die Wickelmatratze hierbei einteilig gefertigt. Diese Variante ist kostengünstig. Beispielsweise kann das Luftkissen dann unter die Wickelmatratze geklappt werden.

Weil unterschiedliche bzw. unabhängige Luftdrücke erforderlich sind, um die Ziele einer steifen Wickelmatratze und einer eingestellten Dicke des Luftkissens erforderlich sind, bietet sich eine Ausgestaltung an, bei der das Luftkissen und die Wickelmatratze jeweils separate Luftkammern und separate Luftventile aufweisen. Das heißt, die erste Luftkammern und die zweite Luftkammer haben keine gasdurchlässige Verbindung. Außerdem heißt dies, dass das erste Luftventil und das zweite Luftventil unterschiedlich sind. Optional kann die erste und/oder zweite Luftkammer jeweils aus mehreren Teilkammern bestehen, die entweder über Strömungsverbindungen verbunden sind oder jeweils ein eigenes Ventil aufweisen.

Bevorzugt sind die Luftventile automatisch schließend oder mit dem Mund verschließbar, insbesondere durch Druckausübung. Damit entweicht nach erreichtem Luftdruck und vor Verschließen des Ventils keine Luft. Als besonders vorteilhaft erweist sich ein Einwege-Wendeventil. In der ersten Ausrichtung ist hierbei lediglich ein Befüllen mit Luft möglich. Hierdurch entweicht beim Absetzen des Mundes keine Luft. In gewendeter Ausrichtung sollte lediglich ein Luftauslass möglich sein. Hierdurch lässt sich die Luft gut herauspressen und die Luftkammer füllt sich nicht wieder beim Hantieren. Sofern das Wendeventil nicht in einer hierfür vorgesehenen Aufnahme sitzt, kann Luft frei durch die Aufnahme strömen. Ergänzt werden kann ein solches Wendeventil mit einem Verschlussmittel. Dann hält sich der Luftdruck in der Luftkammer über einen längeren Zeitraum. Das Einwege-Wendeventil eignet sich insbesondere bei einer Kombination mit Entfaltungsmitteln.

In einer besonders komfortablen und gut transportablen Ausführungsform bildet das Luftkissen eine Packkammer für die Wickelmatratze aus. Das Luftkissen kann zum Transport also die Wickelmatratze aufnehmen. Hierzu kann eine verschließbare Packöffnung in die zweite Luftkammer münden. Optional ist die Packöffnung einrollbar ausgeführt. Durch Einrollen entsprechend einer wasserdichten Packtasche (Wetbag) lässt sich die Packöffnung schließen und ist zumindest für einen Wickelvorgang hinreichend luftdicht. Für das Einrollen und das Verpacken der Wickelvorrichtung sollte entlang der Packöffnung ein Verschlussgurt angeordnet sein. Dieser lässt sich mit Hilfe einer optionalen Schnalle schnell öffnen und schließen. Damit kann auch die Packöffnung schnell geöffnet und geschlossen werden.

In einer anderen Variante ist die Kissenvorderseite oder die Kissenrückseite doppelwandig mit Innenwandung und Außenwandung ausgebildet, in der Außenwandung eine Packöffnung ausgebildet und im Zwischenraum zwischen der Innenwandung und der Außenwandung ein Packraum ausgebildet.

Gemäß einer optionalen Ausgestaltung der Wickelvorrichtung weist die Begradigungsvorrichtung einen Haltegurt auf, der an einer Kopfstütze eines Fahrzeugs festlegbar ist. Damit lässt sich die Wickelmatratze hängend über der schrägen Sitzfläche halten. Hierzu sollte der Haltegurt an der Wickelmatratze festlegbar bzw. festgelegt sein. Vorzugsweise ist der Haltegurt an den optionalen Aufhängelöchern in der Wickelmatratze festlegbar bzw. festgelegt. Für ein einfaches Anbringen und Abnehmen des Haltegurts an der Wickelmatratze sollte der Haltegurt Einhängemittel, insbesondere Haken, aufweisen.

Ergänzt sein kann die Wickelvorrichtung durch den Abdruck einer Bedienungsanleitung auf dem Luftkissen und/oder der Wickelmatratze. Vorzugsweise sind die Arbeitsschritte in Reihenfolge bildlich dargestellt.

Ferner betrifft die Erfindung eine Verwendung einer Wickelmatratze wie sie vorstehend und nachstehend beschrieben ist oder einer Wickelvorrichtung wie sie vorstehend oder nachstehend beschrieben ist zum Wickeln eines Babys oder Kleinkinds. Durch die Verwendung ist ein komfortables Wickeln ohne Stress für den Wickler und das zu wickelnde Kind an einer Vielzahl alltäglicher Umgebungsorte möglich. Die Gefahr von Verunreinigungen wird minimiert.

In einem optionalen Verwendungsfall der Wickelvorrichtung erfolgt die Verwendung auf einem Fahrzeugsitz eines Fahrzeugs. Die erste stumpfe Ecke erlaubt eine flexible und gute Auflage der Wickelmatratze auf dem Fahrzeugsitz und es lassen sich in Abhängigkeit der optionalen Ausgestaltungsmöglichkeiten der Wickelmatratze oder der Wickelvorrichtung auch die weiteren Vorteile gemäß der vorstehenden Beschreibung realisieren.

Eine spezielle Verwendungsvariante sieht vor, dass eine Seitenwange einer Rückenlehne des Fahrzeugsitzes in der Verjüngung, insbesondere in der ersten stumpfen Ecke bzw. Eckausnehmung, liegt und die erste und zweite Seitenbegrenzung längs zu einer vorderen Sitzkante einer Sitzfläche des Fahrzeugsitzes bzw. zu der Fahrzeugachse ausgerichtet sind. Damit ist das Kind bei gut zugänglichen Fahrzeugsitzen gut auf der Wickelmatratze erreichbar.

In einer anderen Verwendungsvariante ist vorgesehen, dass ein Mittenteil einer Rückenlehne des Fahrzeugsitzes in der Verjüngung, insbesondere in der ersten stumpfen Ecke bzw. Eckausnehmung, liegt und die erste und zweite Seitenbegrenzung diagonal zu einer vorderen Sitzkante einer Sitzfläche des Fahrzeugsitzes bzw. zu der Fahrzeugachse ausgerichtet sind. Dies ist insbesondere von Vorteil, wenn nur ein schräger Zugang durch Position und Öffnungswinkel der Fahrzeugtür zum Fahrzeugsitz möglich ist. Das liegende Kind lässt sich durch die diagonale Ausrichtung der Wickelmatratze senkrecht zum Wickler ausrichten.

Eine optionale Ergänzung der Verwendung besteht darin, dass in der Wickelmatratze wenigstens eine erste Luftkammer angeordnet ist, wobei die Wickelmatratze durch Befüllen der ersten Luftkammer mit Luft versteift wird. Damit wird die Wickelmatratze von einem gut verstaubaren Zustand in den Betriebszustand überführt. Auf ebenem Untergrund ist ein vollständiges Belüften unter Umständen entbehrlich. Auf unebenem Untergrund liegt das Kind jedoch wesentlich komfortabler bei einer Eigensteifigkeit der Wickelmatratze.

Die Verwendung kann dadurch ergänzt sein, dass die Wickelvorrichtung eine Begradigungsvorrichtung aufweist, mit der die Wickelmatratze über einem geodätisch schrägen Untergrund geodätisch gerade ausgerichtet wird. Damit wird wirksam verhindert, dass das Kind bei schrägem Untergrund auf der Wickelmatratze ungewollt in Bewegung gerät. Es muss folglich nicht festgehalten werden. Die Hände stehen daher eher für die eigentliche Wickelaufgabe zur Verfügung.

In einer speziellen Verwendung ist vorgesehen, dass die Begradigungsvorrichtung ein Luftkissen aufweist, das auf oder unterhalb der Unterseite der Wickelmatratze angeordnet ist oder wird, und/oder einen Haltegurt aufweist, der an einer Kopfstütze eines Fahrzeugs festlegbar ist, wobei eine geodätische Ausrichtung über dem geodätisch schrägen Untergrund durch Einstellen der Luftmenge in dem Luftkissen unterhalb der Wickelmatratze und/oder durch Festlegen des Haltegurts oberhalb der Wickelmatratze und Einstellen der Länge des Haltegurts erfolgt. Damit wird auf einfache Weise ein Gefälle auf dem Fahrzeug ausgeglichen und die Wickelmatratze bildet eine horizontale Auflage aus. Hierzu sollte das Luftkissen in der Sitzvertiefung zwischen seitlichen Erhöhungen der Sitzfläche bzw. Seitenwangen liegen. Hier kann es die Vertiefung zumindest teilweise ausfüllen und sich die Wickelmatratze auf dem Luftkissen abstützen. Zusätzlich kann die Wickelmatratze partiell auf den seitlichen Erhöhungen bzw. den Seitenwangen aufliegen. Hierdurch wird sie zusätzlich stabil gelagert.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Wickelmatratze;
- Fig. 2: eine Draufsicht auf die Wickelmatratze nach Fig. 1;
- Fig. 3: eine Seitenansicht auf die Wickelmatratze nach Fig. 1;
- Fig. 4: eine perspektivische Ansicht einer als Luftkissen ausgebildeten Begradigungsvorrichtung;
- Fig. 5: eine perspektivische Ansicht einer als Haltegurt ausgebildeten Begradigungsvorrichtung;
- Fig. 6: eine Draufsicht auf eine Wickelvorrichtung mit einer Wickelmatratze nach Fig. 1 und einer Begradigungsvorrichtung in einer ersten Verwendung auf einem Fahrzeugsitz;
- Fig. 7: eine Frontalansicht der in Fig. 6 gezeigten Anordnung;
- Fig. 8: eine Seitenansicht der in Fig. 6 gezeigten Anordnung;
- Fig. 9: eine Draufsicht auf eine Wickelvorrichtung mit einer Wickelmatratze nach Fig. 1 und einer Begradigungsvorrichtung in einer zweiten Verwendung auf einem Fahrzeugsitz;
- Fig. 10: eine Frontalansicht der in Fig. 9 gezeigten Anordnung; und
- Fig. 11: eine Seitenansicht der in Fig. 9 gezeigten Anordnung.

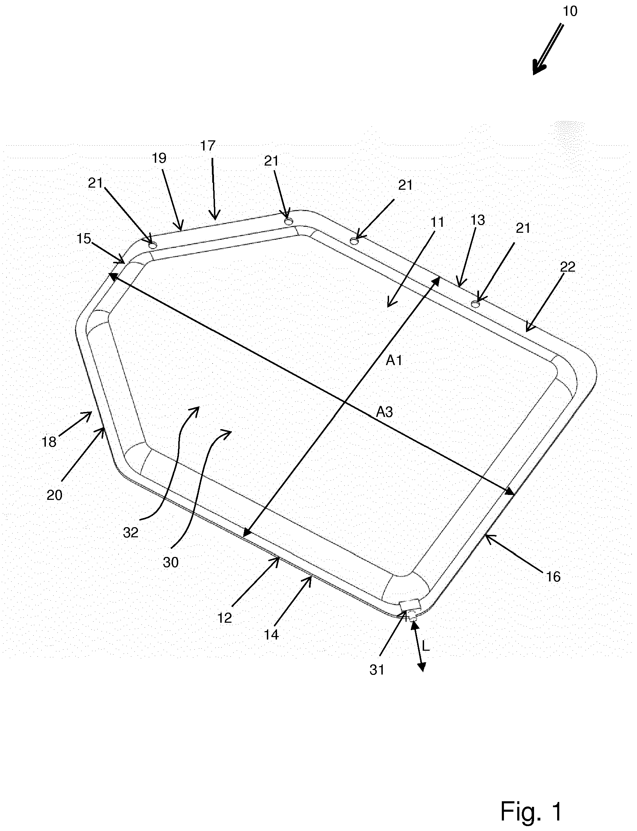

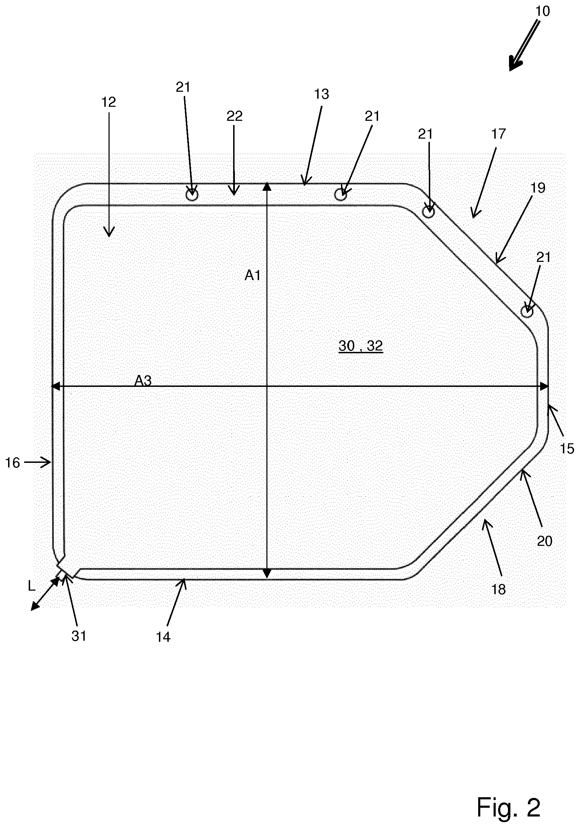

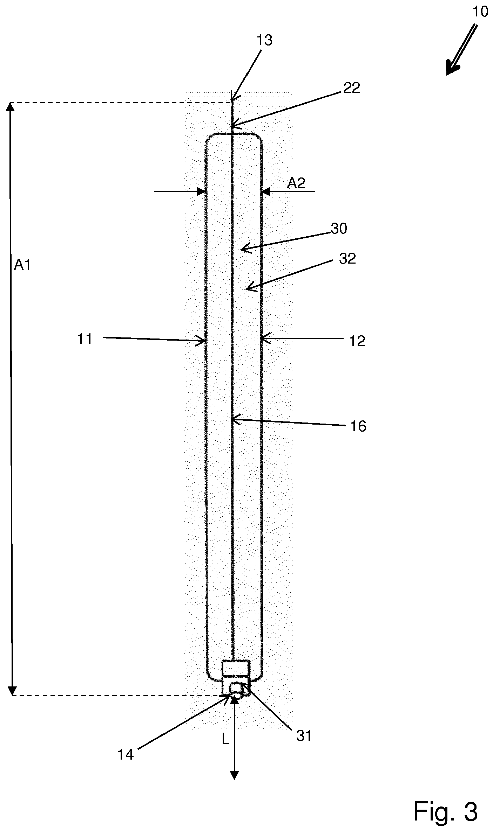

In **Fig. 1** sieht man eine perspektivische Ansicht einer Wickelmatratze 1. Diese Wickelmatratze 1 ist zusätzlich in einer Draufsicht in **Fig. 2** und in einer Seitenansicht in **Fig. 3** gezeigt. In den **Fig. 1****,** **2** **und** **3** erkennt man, dass die Wickelmatratze 10 eine Oberseite 11 (nur in Fig. 1 und 3 zu sehen), eine Unterseite 12, eine erste und eine zweite Seitenbegrenzung 13, 14, die sich gegenüberliegen und im Wesentlichen parallel zueinander ausgerichtet sind, sowie ein vorderes Ende 15 bzw. eine Vorderkante (nur in Fig. 1 und 2 zu sehen) und ein hinteres Ende 16 bzw. eine Hinterkante, die quer zu der ersten und zweiten Seitenbegrenzung 13, 14 ausgerichtet sind, aufweist. Die Oberseite 11 bildet eine ebene Liegefläche und die Unterseite 12 eine ebene Auflagefläche aus.

In der Wickelmatratze 10 ist eine erste Luftkammer 30 angeordnet, wodurch die Wickelmatratze 10 bei einer Befüllung der ersten Luftkammer 30 mit Luft L steif ist. Entlüftet man die erste Luftkammer 30 ist die Wickelmatratze 10 schlaff. Sie hat dann keine Eigensteifigkeit und lässt sich zusammenlegen. Zur Be- und Entlüftung der ersten Luftkammer 30 mündet ein erstes Luftventil 31 in die erste Luftkammer 30. Das erste Luftventil 31 ist am Umfang der Wickelmatratze 10 zwischen der Oberseite 11 und der Unterseite 12 angeordnet. Die Wickelmatratze 10 ist vorliegend als selbstaufblasbare Luftmatratze ausgeführt, indem in der ersten Luftkammer 30 elastische Entfaltungsmittel 32 in Form eines elastischen Schaumstoffs angeordnet sind, die eine Entfaltungskraft auf die Luftkammer 30 ausüben. Durch Längs- und Querkanäle oder auch vertikale Hohlräume kann das Volumen des Schaumstoffs gering gehalten werden. Die Wickelmatratze 10 ist hierdurch einfach entlüftbar, gut zusammenlegbar und leicht.

Weiterhin verfügt die Wickelmatratze 10 über einen flachen Kragen 22, der die Oberseite 11 und die Unterseite 12 einrahmt. Die Oberseite 11 und die Unterseite 12 sind in diesem Kragen 22 miteinander verbunden, insbesondere verschweißt oder geklebt. Wie man in den Fig. 1 und 2 sieht, sind in dem Kragen 22 Aufhängelöcher 21 ausgebildet.

Insgesamt ist die Wickelmatratze 10 flach ausgebildet. Dabei beträgt der Abstand A1 zwischen der ersten und zweiten Seitenbegrenzung 13, 14 wenigstens dem 5-fachen, bevorzugt wenigstens dem 7-fachen und besonders bevorzugt wenigstens dem 10-fachen, des Abstandes A2 (siehe Fig. 3) zwischen der Oberseite 11 und der Unterseite 12. In absoluten Werten beträgt der Abstand A3 zwischen dem vorderen Ende 15 und dem hinteren Ende 16 zwischen 40 cm und 90 cm, vorzugsweise zwischen 50 cm und 85 cm, weiter bevorzugt zwischen 55 cm und 80 cm, und besonders bevorzugt zwischen 60 cm und 75 cm. Außerdem beträgt der Abstand A1 zwischen der ersten und der zweiten Seitenbegrenzung 13, 14 zwischen 35 cm und 70 cm, vorzugsweise zwischen 40 cm und 65 cm, weiter bevorzugt zwischen 45 cm und 62 cm, und besonders bevorzugt zwischen 50 cm und 60 cm.

Gemäß den Fig. 1 und 2 ist zwischen dem vorderen Ende 15, insbesondere einer Vorderkante, und der ersten Seitenbegrenzung 13 eine erste stumpfe Ecke 17 bzw. eine erste Eckausnehmung von einer schrägen Eckkante 19 ausgebildet. Hierdurch ist das vordere Ende 15 gegenüber dem hinteren Ende 16 verjüngt. Die erste stumpfe Ecke 17 erstreckt sich auf der Seite des vorderen Endes 15 über eine Länge zwischen 10 % und 50 %, vorzugsweise zwischen 20 % und 45 %, weiter bevorzugt zwischen 25 % und 42 %, und besonders bevorzugt zwischen 30 % und 40 % des Abstands A1 zwischen der ersten und zweiten Seitenbegrenzung 13, 14. Außerdem beträgt die Länge der ersten stumpfen Ecke 17 auf der Seite der ersten Seitenbegrenzung 13 zwischen 15 % und 40 %, vorzugsweise zwischen 17 % und 38 %, weiter bevorzugt zwischen 20 % und 35 %, und besonders bevorzugt zwischen 25 % und 30 % des Abstands A3 zwischen dem vorderen Ende 15 und dem hinteren Ende 16. Vorliegend bildet die erste Eckkante 19 einen Winkel von 45 Grad zur ersten Seitenbegrenzung 13 und zum vorderen Ende 15 bzw. der Vorderkante. Der Innenwinkel beträgt also 135 Grad.

Außerdem ist zwischen dem vorderen Ende 15 und der zweiten Seitenbegrenzung 14 mittels einer zweiten Eckkante 20 eine zweite stumpfe Ecke 18 ausgebildet, die der ersten stumpfen Ecke 17 ähnelt. Auch hierdurch liegt eine Verjüngung auf Seiten des vorderen Endes 15 gegenüber dem hinteren Ende 16 vor. Vorliegend ist die zweite stumpfe Ecke 18 spiegelverkehrt zur ersten stumpfen Ecke 17 ausgebildet. Dies bezieht sich insbesondere auf den Kragen 22. Dahingegen ist die erste Luftkammer 30 leicht asymmetrisch verschoben, sodass der Kragen 22 an der ersten Seitenbegrenzung 13 breiter ist als an der zweiten Seitenbegrenzung 14. Die Aufhängelöcher 21 finden sich in dem breiteren Kragenabschnitt auf der Seite der ersten Seitenbegrenzung 13.

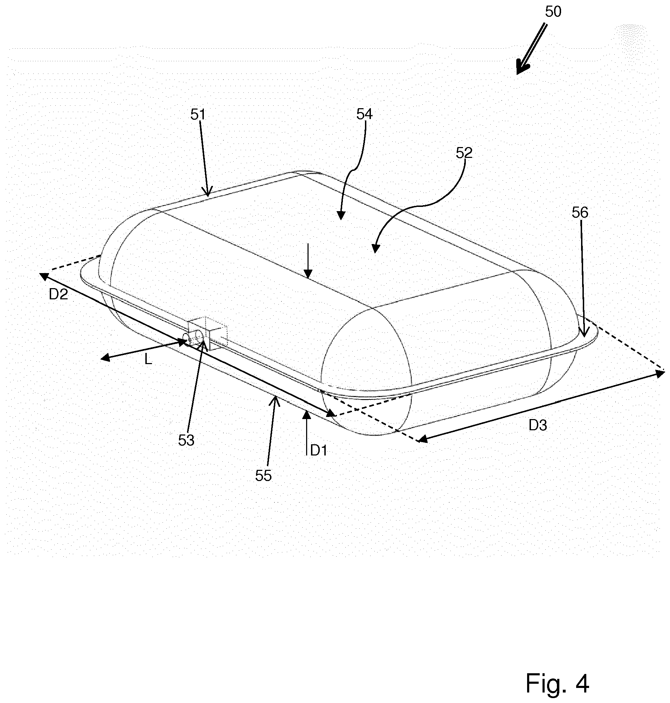

**Fig. 4** zeigt eine perspektivische Ansicht einer als Luftkissen 51 ausgebildeten Begradigungsvorrichtung 50, mit der die Wickelmatratze 10 nach den Fig. 1 bis 3 über einem geodätisch schrägen Untergrund geodätisch gerade ausrichtbar ist.

Das Luftkissen 51 hat eine Kissenoberseite 54 und eine Kissenunterseite 55. Am Umfang des Luftkissens 51 ist zwischen der Kissenoberseite 54 und der Kissenunterseite 55 ein Kissenkragen 56 ausgebildet, der die Kissenoberseite 54 und die Kissenunterseite 55 einrahmt. Die Kissenoberseite 54 und die Kissenunterseite 55 sind im Kissenkragen 56 miteinander verbunden, insbesondere verschweißt oder verklebt.

Das Luftkissen 51 verfügt ebenfalls über eine Luftkammer 52 (im Weiteren als zweite Luftkammer 52 bezeichnet), in die ein zweites Luftventil 53 mündet. Das zweite Luftventil 53 ist insbesondere am Umfang um die Länge D2 und Breite D3 angeordnet und liegt hier zwischen der Kissenoberseite 54 und der Kissenunterseite 55. Damit ist die Dicke D1 des Luftkissens durch variable Befüllung der zweiten Luftkammer 52 mit Luft einstellbar. Dabei wird das Luftkissen 51 durch den Kissenkragen 56 stabilisiert. Die maximale Dicke D1 des Luftkissens 51 liegt zwischen 4 cm und 20 cm, vorzugsweise zwischen 8 cm und 18 cm, weiter bevorzugt zwischen 11 cm und 17 cm und besonders bevorzugt zwischen 12 cm und 16 cm. Außerdem ist die maximale Dicke D1 des Luftkissens 51 kleiner ist als die Länge D2 und die Breite D3 des Luftkissens 51. Die Breite D3 des Luftkissens 51 ist wiederum kleiner als die Länge D2 des Luftkissens 51.

In absoluten Werten beträgt die maximale Länge D2 des Luftkissens 51 zwischen 20 cm und 55 cm, vorzugsweise zwischen 25 cm und 50 cm, weiter bevorzugt zwischen 30 cm und 46 cm und besonders bevorzugt zwischen 35 cm und 43 cm. Außerdem liegt die maximale Breite D3 des Luftkissens 51 zwischen 8 cm und 25 cm, vorzugsweise zwischen 10 cm und 24 cm, weiter bevorzugt zwischen 12 cm und 23 cm und besonders bevorzugt zwischen 13 cm und 22 cm.

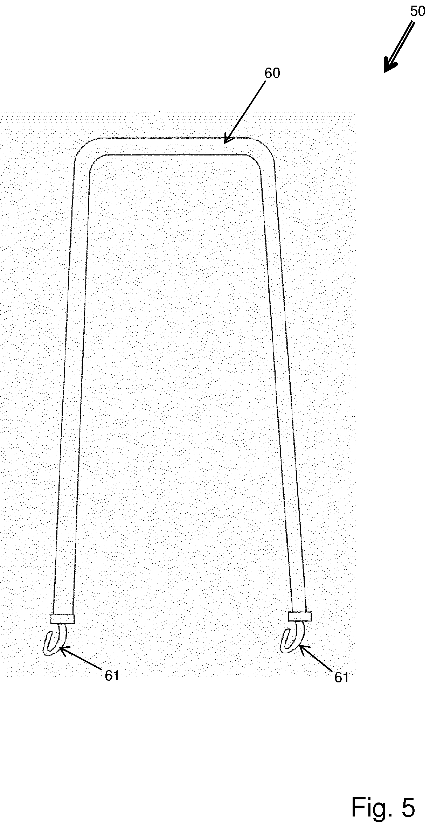

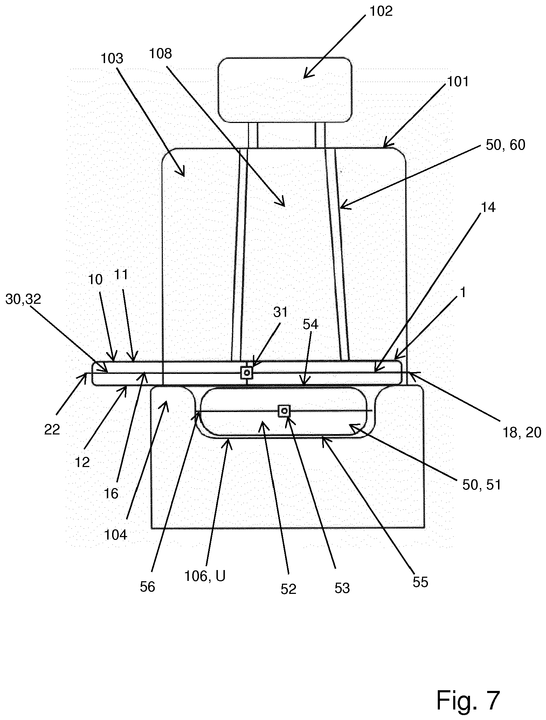

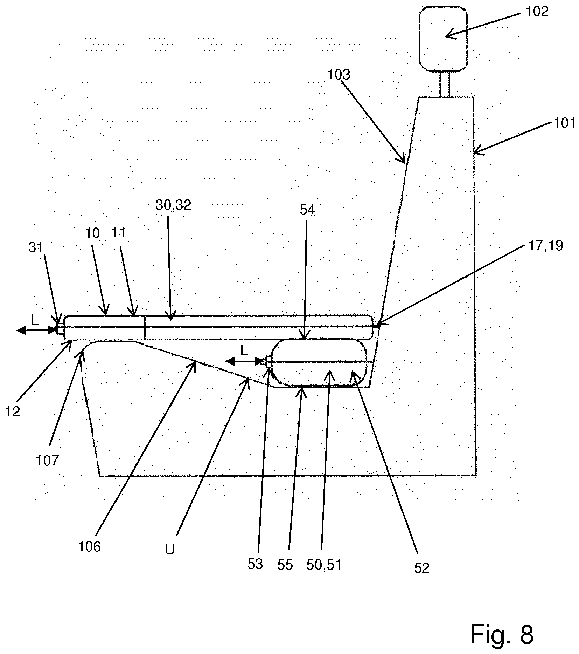

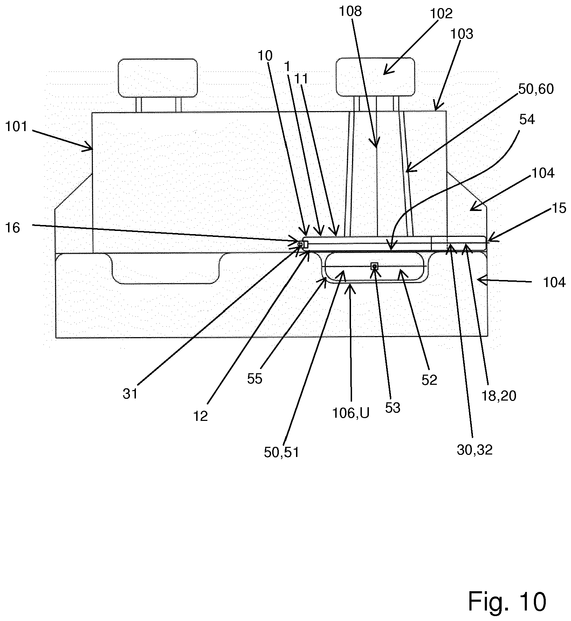

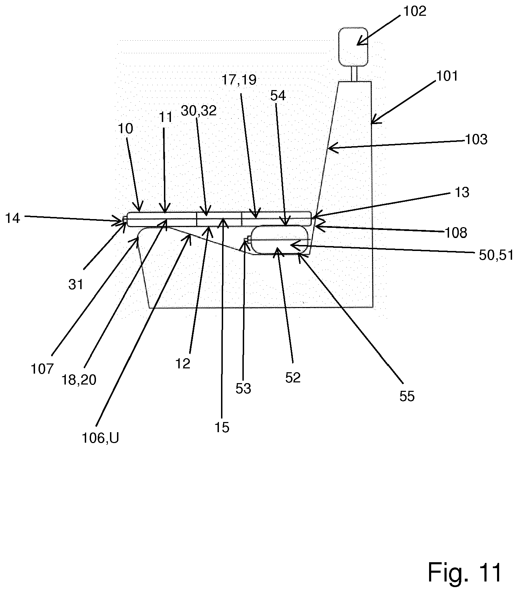

Vergleicht man die Dimensionierung des Luftkissens 51 mit derjenigen der Wickelmatratze 10 nach Fig. 1, 2 und 3, so erkennt man insbesondere in den Figuren 5 bis 11, dass die maximale Dicke D1 des Luftkissens 51 größer ist als der Abstand A2 zwischen der Oberseite 11 und der Unterseite 12 der Wickelmatratze 10. Zudem sind die Länge D2 und die Breite D3 des Luftkissens 51 geringer als der Abstand A1 zwischen der ersten und der zweiten Seitenbegrenzung 13, 14 der Wickelmatratze 10.

Das Luftkissen 51 und die Wickelmatratze 10 weisen also jeweils eine separate Luftkammer 30, 52 und separate Luftventile 31 ,53 auf. Die erste Luftkammern 30 und die zweite Luftkammer 52 haben keine gasdurchlässige Verbindung. Außerdem sind das erste Luftventil 31 und das zweite Luftventil 53 unterschiedlich.

**Fig. 5** zeigt eine perspektivische Ansicht einer als Haltegurt 60 ausgebildeten Begradigungsvorrichtung 50. Dieser kann alleine oder in Kombination mit der als Luftkissen 51 ausgeführten Begradigungsvorrichtung 50 nach Fig. 4 eingesetzt werden, um eine Wickelmatratze 10 gemäß den Fig. 1 bis 3 über einem geodätisch schrägen Untergrund geodätisch gerade auszurichten. Insbesondere kann ein solcher Haltegurt an einer Kopfstütze 102 eines Fahrzeugs festgelegt werden, um die Wickelmatratze 10 zumindest einseitig hängend zu lagern. Dafür ist der Haltegurt 60 an der Wickelmatratze 10 festlegbar, insbesondere mit Hilfe von hakenförmigen Einhängemitteln 61 an den beiden freien Enden des Haltegurts 60. Diese lassen sich in den Aufhängelöchern 21 in der Wickelmatratze 10 durch Einhängen festlegen.

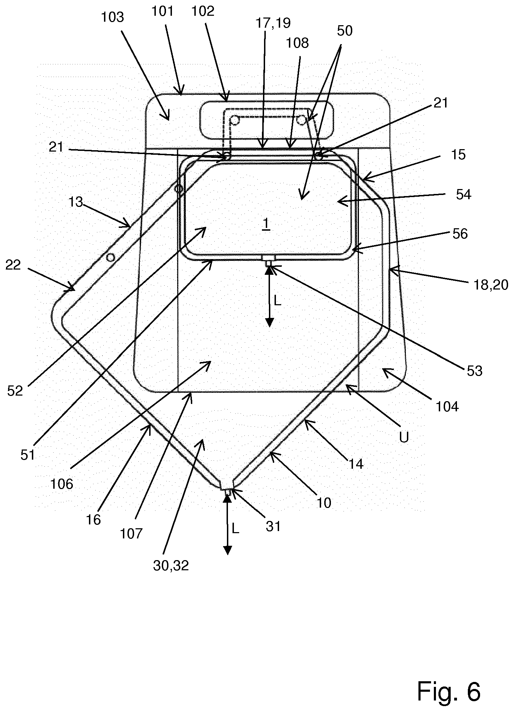

In den **Fig. 6 bis 11** sieht man, wie mit einer Wickelvorrichtung 1 aufweisend eine Wickelmatratze 10 nach den Fig. 1, 2 und 3 und eine Begradigungsvorrichtung 50 umfassend ein Luftkissen 51 nach Fig. 4 und einen Haltegurt 60 nach Fig. 5 eine geodätisch gerade Liegefläche auf einem unebenen Untergrund U in Form eines Fahrzeugsitzes 101 geschaffen wird.

Hinsichtlich der in den Fig. 6 bis 11 gezeigten Wickelmatratze 10 wird auf die vorstehende Beschreibung zu den Fig. 1 bis 3 verwiesen. Außerdem wird hinsichtlich des Luftkissens 10 auf vorstehende Beschreibung zu Fig. 4 und betreffend den Haltegurt 60 auf die vorstehende Beschreibung zu Fig. 5 verwiesen.

Über die Einzelteilbeschreibung hinaus, erkennt man in Fig. 6 bis 11 die relative Anordnung von Wickelmatratze 10, Luftkissen 51 und Haltegurt 60 zueinander. Das Luftkissen 10 liegt jeweils in einer Sitzmulde einer Sitzfläche 106 sowie zwischen zwei Seitenwangen 104 sowie unterhalb der Unterseite 12 der Wickelmatratze 10. In allen Ausführungen der Fig. 6 bis 11 ist außerdem der Haltegurt 60 an einer Kopfstütze 102 eingehängt.

In den Fig. 6 bis 8 sowie den Fig. 9 bis 11 sind insbesondere abweichende Verwendungsarten durch eine abweichend Ausrichtung der Wickelmatratze 10 auf dem Fahrzeugsitz 101 gezeigt, die jedoch jeweils zum Wickeln eines Babys oder Kleinkinds auf dem Fahrzeugsitz 101 geeignet sind.

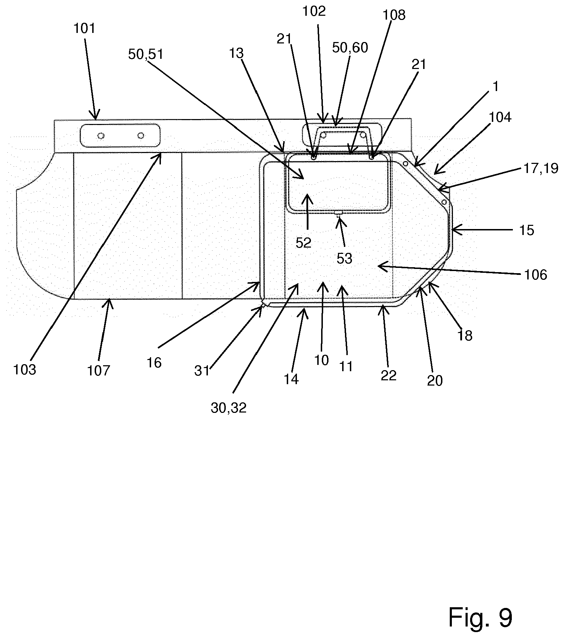

So erkennt man in den **Fig. 9 bis 11**, dass eine Seitenwange 104 einer Rückenlehne 103 des Fahrzeugsitzes 101 in der ersten stumpfen Ecke 17 der Wickelmatratze 10 liegt und die erste und zweite Seitenbegrenzung 13, 14 parallel zu einer vorderen Sitzkante 107 einer Sitzfläche 106 des Fahrzeugsitzes 101 ausgerichtet sind.

Bei der Verwendung nach den **Fig. 6 bis 8** liegt hingegen ein Mittenteil 108 der Rückenlehne 103 in der ersten stumpfen Ecke 17. Insbesondere stößt die erste Eckkante 19 gegen diesen Mittenteil 108. Die erste und zweite Seitenbegrenzung 13, 14 sind hierdurch diagonal zu einer vorderen Sitzkante 107 der Sitzfläche 106 des Fahrzeugsitzes 10 ausgerichtet.

Bei beiden Verwendungsarten nach den Fig. 6 bis 8 sowie den Fig. 9 bis 11 lässt sich die Wickelmatratze 10 durch Befüllen der ersten Luftkammer 30 mit Luft L versteifen und mit der Begradigungsvorrichtung 50 über dem geodätisch schrägen Untergrund U geodätisch gerade ausrichten. Bei der Verwendung lässt sich die geodätische Ausrichtung der Wickelmatratze 10 über dem geodätisch schrägen Untergrund U durch Einstellen der Luftmenge in dem Luftkissen 51 unterhalb der Wickelmatratze 10 und/oder Festlegen des Haltegurts 60 oberhalb der Wickelmatratze 10 und Einstellen der Länge des Haltegurts 60 erreichen. Zusätzlich stützt sich die Wickelmatratze 10 partiell auf Seitenwangen 104 der Sitzfläche 106 ab. Anschließend kann man das Baby oder Kleinkind zum Wickeln auf die Oberseite 11 legen.

**Bezugszeichenliste**

| | | | |
|---|---|---|---|
| 1 | Wickelvorrichtung | | |
| | | 60 | Haltegurt |
| 10 | Wickelmatratze | 61 | Einhängemittel |
| 11 | Oberseite | | |
| 12 | Unterseite | 101 | Fahrzeugsitz |
| 13 | erste Seitenbegrenzung | 102 | Kopfstütze |
| 14 | zweite Seitenbegrenzung | 103 | Rückenlehne |
| 15 | vorderes Ende | 104 | Seitenwange |
| 16 | hinteres Ende | 106 | Sitzfläche |
| 17 | erste stumpfe Ecke | 107 | vordere Sitzkante |
| 18 | zweite stumpfe Ecke | 108 | Mittenteil (Rückenlehne) |
| 19 | erste Eckkante | | |
| 20 | zweite Eckkante | A1 | Abstand (zwischen den |
| 21 | Aufhängeloch | | Seitenbegrenzungen) |
| 22 | Kragen | A2 | Abstand (zwischen Oberseite und Unterseite) |
| 30 | erste Luftkammer | A3 | Abstand (zwischen vorderem Ende |
| 31 | erstes Luftventil | | und hinterem Ende) |
| 32 | Entfaltungsmittel | D1 | Dicke (Luftkissen) |
| | | D2 | Länge (Luftkissen) |
| 50 | Begradigungsvorrichtung | D3 | Breite (Luftkissen) |
| 51 | Luftkissen | L | Luft |
| 52 | zweite Luftkammer | U | Untergrund |
| 53 | zweites Luftventil | | |
| 54 | Kissenoberseite | | |
| 55 | Kissenunterseite | | |
| 56 | Kissenkragen | | |

## Patentansprüche

1. **Wickelmatratze** (10) mit
- einer Oberseite (11),
- einer Unterseite (12),
- einer ersten Seitenbegrenzung (13) und einer zweiten Seitenbegrenzung (14), die sich gegenüberliegen, sowie
- einem vorderen Ende (15) und einem hinteren Ende (16), die quer zu der ersten und zweiten Seitenbegrenzung (13, 14) ausgerichtet sind,
- wobei das vordere Ende (15) im Verhältnis zum hinteren Ende (16) eine Verjüngung aufweist,
**dadurch gekennzeichnet, dass**
- in der Wickelmatratze (1) wenigstens eine erste Luftkammer (30) angeordnet ist, wobei die Wickelmatratze (10) bei einer Befüllung der ersten Luftkammer (30) mit Luft (L) versteift ist.

2. Wickelmatratze (10) nach Anspruch 1, **dadurch gekennzeichnet, dass** die erste Seitenbegrenzung (13) und die zweite Seitenbegrenzung (14) zumindest im Wesentlichen parallel zueinander ausgerichtet sind.

3. Wickelmatratze (10) nach einem der Ansprüche 1 oder 2, **dadurch gekennzeichnet, dass** die Verjüngung zumindest teilweise durch eine erste stumpfe Ecke (17) zwischen dem vorderen Ende (15) und der ersten Seitenbegrenzung (13) ausgebildet ist.

4. Wickelmatratze (10) nach Anspruch 3, **dadurch gekennzeichnet, dass** die erste stumpfe Ecke (17) von einer schrägen ersten Eckkante (19) der Wickelmatratze (10) ausgebildet ist.

5. Wickelmatratze (10) nach einem der Ansprüche 3 oder 4, **dadurch gekennzeichnet, dass** die Verjüngung zumindest teilweise durch eine zweite stumpfe Ecke (18) zwischen dem vorderen Ende (15) und der zweiten Seitenbegrenzung (14) ausgebildet ist.

6. Wickelmatratze (10) nach einem der vorhergehenden Ansprüche, **dadurch gekennzeichnet, dass** diese elastische Entfaltungsmittel (32) aufweist, welche eine Entfaltungskraft auf die erste Luftkammer (30) ausüben.

7. Wickelmatratze (10) nach Anspruch 6, **dadurch gekennzeichnet, dass** in der Luftkammer (30) ein elastischer Schaumstoff angeordnet ist.

8. Wickelmatratze (10) nach einem der vorhergehenden Ansprüche, **dadurch gekennzeichnet, dass** die Oberseite (11) eine ebene Liegefläche ausbildet.

9. Wickelmatratze (10) nach einem der vorhergehenden Ansprüche, **dadurch gekennzeichnet, dass** die Unterseite (12) eine ebene Auflagefläche ausbildet.

10. Wickelmatratze (10) nach einem der vorhergehenden Ansprüche, **dadurch gekennzeichnet, dass** diese einen flachen Kragen (22) aufweist, der die Oberseite (11) und die Unterseite (12) einrahmt.

11. Wickelmatratze (10) nach einem der vorhergehenden Ansprüche, **dadurch gekennzeichnet, dass** Aufhängelöcher (21) in der Wickelmatratze (1) ausgebildet sind.

12. Wickelmatratze (10) nach den Ansprüchen 10 und 11, **dadurch gekennzeichnet, dass** die Aufhängelöcher (21) im Kragen (22) der Wickelmatratze (1) ausgebildet sind.

13. **Wickelvorrichtung** (1) mit einer Wickelmatratze (10) nach einem der vorhergehenden Ansprüche und einer Begradigungsvorrichtung (50), mit der die Wickelmatratze (10) über einem geodätisch schrägen Untergrund (U) geodätisch gerade ausrichtbar ist.

14. Wickelvorrichtung (1) nach Anspruch 13, **dadurch gekennzeichnet, dass** die Begradigungsvorrichtung (50) ein Luftkissen (51) aufweist, das auf oder unterhalb der Unterseite (12) der Wickelmatratze (10) angeordnet ist.

15. Wickelvorrichtung (1) nach einem der Ansprüche 13 oder 14, **dadurch gekennzeichnet, dass** die Begradigungsvorrichtung (50) einen Haltegurt (60) aufweist, der an einer Kopfstütze (102) eines Fahrzeugs festlegbar ist.

16. **Verwendung** einer Wickelmatratze (10) nach einem der Ansprüche 1 bis 12 oder einer Wickelvorrichtung (1) nach einem Ansprüche 13 bis 15 zum Wickeln eines Babys oder Kleinkinds.

17. Verwendung nach Anspruch 16, wobei die Wickelvorrichtung (1) eine Begradigungsvorrichtung (50) aufweist, mit der die Wickelmatratze (10) über einem geodätisch schrägen Untergrund (U) geodätisch gerade ausgerichtet wird.

## Claims

1. **Changing mat** (10) having
- an upper side (11),
- a lower side (12),
- a first lateral delimitation (13) and a second lateral delimitation (14) which are mutually opposite, as well as
- a front end (15) and a rear end (16) which are aligned transversely to the first and second lateral delimitations (13, 14),
- wherein the front end (15) has a tapering in relation to the rear end (16),
**characterised in that**
- in the changing mattress (1) is arranged at least one first air chamber (30), wherein the changing mattress (10) is made rigid when the first air chamber (30) is filled with air (L).

2. Changing mattress (10) according to claim 1, **characterised in that** the first lateral delimitation (13) and the second lateral delimitation (14) are aligned at least substantially parallel to one another.

3. Changing mattress (10) according to any of claims 1 or 2, **characterised in that** the tapering is formed at least partially by a first obtuse corner (17) between the front end (15) and the first lateral delimitation (13).

4. Changing mattress (10) according to claim 3, **characterised in that** the first obtuse corner (17) is formed by an oblique first corner edge (19) of the changing mattress (10).

5. Changing mattress (10) according to any of claims 3 or 4, **characterised in that** the tapering is formed at least partially by a second obtuse corner (18) between the front end (15) and the second lateral delimitation (14).

6. Changing mattress (10) according to any of the preceding claims, **characterised in that** said changing mattress has resilient unfolding means (32) which exert an unfolding force on the first air chamber (30).

7. Changing mattress (10) according to claim 6, **characterised in that** in the air chamber (30) is arranged a resilient foam material.

8. Changing mattress (10) according to any of the preceding claims, **characterised in that** the upper side (11) forms a flat lying surface.

9. Changing mattress (10) according to any of the preceding claims, **characterised in that** the underside (12) forms a flat support surface.

10. Changing mattress (10) according to any of the preceding claims, **characterised in that** said changing mattress has a shallow collar (22) which frames the upper side (11) and the lower side (12).

11. Changing mattress (10) according to any of the preceding claims, **characterised in that** suspension holes (21) are formed in the changing mattress (1).

12. Changing mattress (10) according to claims 10 and 11, **characterised in that** the suspension holes (21) are formed in the collar (22) of the changing mattress (1).

13. **Changing device** (1) having a changing mattress (10) according to any of the preceding claims and a straightening device (50) with which the changing mattress (10) can be aligned in a geodetically straight manner above a geodetically inclined underground (U).

14. Changing device (1) according to claim 13, **characterised in that** the straightening device (50) has an air cushion (51) which is arranged on or below the underside (12) of the changing mattress (10).

15. Changing device (1) according to any of claims 13 or 14, **characterised in that** the straightening device (50) has a retaining belt (60) which can be fastened on a head support (102) of a vehicle.

16. **Use** of a changing mattress (10) according to any of claims 1 to 12 or a changing device (1) according to any of claims 13 to 15 for changing a baby or toddler.

17. Use according to claim 16, wherein the changing device (1) has a straightening device (50) with which the changing mattress (10) is aligned in a geodetically straight manner above a geodetically inclined underground (U).

## Revendications

1. **Matelas à langer** (10) avec
- un côté supérieur (11),
- un côté inférieur (12),
- une première limite latérale (13) et une seconde limite latérale (14) qui sont opposées l'une à l'autre, et
- une extrémité avant (15) et une extrémité arrière (16) qui sont alignées transversalement par rapport à la première et seconde limite latérale (13, 14),
- l'extrémité avant (15) présentant un rétrécissement par rapport à l'extrémité arrière (16),
**caractérisé en ce que**
- au moins une première chambre à air (30) est disposée dans le matelas à langer (1), le matelas à langer (10) étant rigidifié lorsque la première chambre à air (30) est remplie d'air (L).

2. Matelas à langer (10) selon la revendication 1, **caractérisé en ce que** la première limite latérale (13) et la seconde limite latérale (14) sont alignées au moins sensiblement parallèlement l'une à l'autre.

3. Matelas à langer (10) selon l'une quelconque des revendications 1 ou 2, **caractérisé en ce que** le rétrécissement est au moins partiellement formé par un premier coin émoussé (17) entre l'extrémité avant (15) et la première limite latérale (13).

4. Matelas à langer (10) selon la revendication 3, **caractérisé en ce que** le premier coin émoussé (17) est formé par un premier bord de coin oblique (19) du matelas à langer (10).

5. Matelas à langer (10) selon l'une quelconque des revendications 3 ou 4, **caractérisé en ce que** le rétrécissement est au moins partiellement formé par un second coin émoussé (18) entre l'extrémité avant (15) et la seconde limite latérale (14).

6. Matelas à langer (10) selon l'une quelconque des revendications précédentes, **caractérisé en ce que** celui-ci présente des moyens de déploiement élastiques (32) exerçant une force de déploiement sur la première chambre à air (30).

7. Matelas à langer (10) selon la revendication 6, **caractérisé en ce qu'**une mousse élastique est disposée dans la chambre à air (30).

8. Matelas à langer (10) selon l'une quelconque des revendications précédentes, **caractérisé en ce que** le côté supérieur (11) forme une surface de couchage plane.

9. Matelas à langer (10) selon l'une quelconque des revendications précédentes, **caractérisé en ce que** le côté inférieur (12) forme une surface de contact plane.

10. Matelas à langer (10) selon l'une quelconque des revendications précédentes, **caractérisé en ce que** celui-ci présente un col plat (22) qui encadre le côté supérieur (11) et le côté inférieur (12).

11. Matelas à langer (10) selon l'une quelconque des revendications précédentes, **caractérisé en ce que** des trous de suspension (21) sont formés dans le matelas à langer (1).

12. Matelas à langer (10) selon les revendications 10 et 11, **caractérisé en ce que** les trous de suspension (21) sont formés dans le col (22) du matelas à langer (1).

13. **Dispositif à langer** (1) avec un matelas à langer (10) selon l'une quelconque des revendications précédentes et un dispositif de redressement (50) avec lequel le matelas à langer (10) peut être aligné géodésiquement sur un sol (U) incliné géodésiquement.

14. Dispositif à langer (1) selon la revendication 13, **caractérisé en ce que** le dispositif de redressement (50) présente un coussin d'air (51) disposé sur ou sous le côté inférieur (12) du matelas à langer (10).

15. Dispositif à langer (1) selon l'une quelconque des revendications 13 ou 14, **caractérisé en ce que** le dispositif de redressement (50) présente une sangle de retenue (60) qui peut être fixée à un appui-tête (102) d'un véhicule automobile.

16. **Utilisation** d'un matelas à langer (10) selon l'une quelconque des revendications 1 à 12 ou d'un dispositif à langer (1) selon l'une quelconque des revendications 13 à 15 pour langer un bébé ou un nourrisson.

17. Utilisation selon la revendication 16, dans laquelle le dispositif à langer (1) présente un dispositif de redressement (50) avec lequel le matelas à langer (10) est aligné géodésiquement sur un sol (U) incliné géodésiquement.
